# EUROPEAN PATENT APPLICATION

(11) **EP 3 189 726 A1**
(43) Date of publication of application: **12.07.2017**
(21) Application number: 16462001.5
(22) Date of filing: 08.01.2016
(51) Int. Cl.: A01G 25/16, B05B 12/00, H04L 29/08

(54) **IRRIGATION SYSTEM CONTROLLER PROCEDURE WITH ARTIFICIAL INTELLIGENCE BASED OPTIMIZATION**

(71) Applicant: Fatimex Technologies Kft., 1023 Budapest (HU)
(72) Inventor: Zsolnai, Máté, H-1027 Budapest (HU)
(74) Representative: Mak, Andras

(57) **Abstract**

The below described solution estimates prospective environmental outlooks that stochastically influence irrigation system controls through artificial intelligence optimization of inter competitive mathematical models.

Synchronic consideration of multiple evaluation aspects allows to control sluices, pumps and other field elements of irrigation systems along the best optimal estimations and water demand.

Estimations are calculated on the basis of own sensor data of the control system. Actively controllable system elements are set up on the basis of the balance of expected water wastage and proposed water usage. Each and every mathematical model variant competing with each other for control authorization, that are involved in the optimization of control system, is calculated in every case. Numerous model indicators are calculated based on certain model variant estimations and exposed data.

Along the every model is uniform in different ways analogy (vö. Pitlik, 2006-2009, My-X projekt, INNOCSEKK-program) the most sustainable model will be the basis of calculations in an actual control decision. The above described ideal-based control after adequate amount of experience switches to function-optimization learning process, confronting model attributes with experimental results in a case of optional number of model variants, from which authorisation will be given according to the above described analogy, where the ideal-searcher model itself stays active among competitor models.

## Description

### Hardware

The hardware development can be divided into two groups: the developed equipment, and the acquired and integrated equipment.

With the help of equipment that is integrated, technical controllers implement the operation of field elements (pumps, complete water station, meteorological station, etc.) of the system, involving server hardware as well.

### PCM equipment

Control of field elements of the system is controlled through PCM (*Pump station Control and Monitor* hardware devices) devices that can be installed into racks. The devices are acquired according to the same configuration, including the below listed modules:
PCM-1011 central control module
PCM-1014 uninterruptible module
PCM-1016 analogue sensor control module
PCM-1017 digital sensor control module
PCM-1023 sabotage protection module
PCM-1024 data archiving module
PCM-1032 netcam module
PCM-1054 controller module

The devices ensure the operation of field elements with the following functions: Pump start and stop
Pump performance control
Pump performance monitoring
Pump performance prorate water volume
Headwater and foot water depth measuring
Sluice opening and locking
Sluice position control
Sluice position monitoring
Water depth measuring

The equipment except the above listed tasks meets the below requirements also: Autonomous operation and control, without a server connection
Local data collection
Data transfer towards servers
Server-side synchronization
Sabotage notifications
   ∘ inadequate operation
   ∘ power supply malfunction
   ∘ accumulator failure
   ∘ abnormal operation changes
Firmware development possibility
Firmware solutions expandability options
   ∘ synchronisation of new devices, sensors
The possibility to install into an electric box
Server synchronization with the security hardware

### Server devices

The procedure described in point 1 of this chapter requires server devices with the below functions:
HP Proliant DL380 servers (2 pieces)
   ∘ virtualization
   ∘ server management
   ∘ operating NGW software
   ∘ redundant data storage
      ▪ RAID
      ▪ data synchronization
   ∘ software replication and redundancy
   ∘ redundant network connection
   ∘ database running
   ∘ Business Intelligence running
   ∘ redundant power supply
   ∘ Rack architecture
HP Proliant DL120 server
   ∘ virtualization
   ∘ project development support environment
      ▪ version management
      ▪ document management
      ▪ data storage, user storage
      ▪ project communication storage
      ▪ test system configuration
      ▪ strategic plan management and storage
   ∘ monitoring functions
   ∘ Rack architecture
PCM 5000
   ∘ data security centre
   ∘ contact management with PCM hardware
      ▪ configuration management
      ▪ data storage
      ▪ data integration supervision
   ∘ network connection management
   ∘ data transfer towards NGW software
   ∘ NGW module supervision
   ∘ Rack architecture

According to an adequate server physical architecture racks are required with network connections.

### New hardware

The development project requires newly invented devices with the below functionalities, supplementing water management data collection with additionally measured parameters.
compatibility with PCM-2015 devices
data communication through PCM-2015 devices
data communication with PCM-5000 devices
wireless communication in cases of external devices
energy-efficient operation
robust architecture
weather-resistant design
simple maintenance
integrated microcontroller
expenditure optimization

### Software

Different software modules have to be designed in order to realize main functions. Tasks are implemented through four main modules communicating with each other through interfaces.

The software includes the following main modules:
Data collection module
Data assessment module
Timetable module
User client module
The above modules are accessible through a mobile software: the erPUB.

The software functionalities are described in the following:

### Data collection module

- data collection device identification, verification with a predefined schedule, or predefined events
- data transfer from the collecting device, data deletion from the collection device
- log saves according to data transfers
- data storage in the database
- implementation of basic corrective calculations and data storage in the database
- collection of sabotage notifications from the Connection Security Centre
- sabotage event notification through the Client module
- notification management log

### Database

- chronological storage of measured data
- weather data
- water level
- water movement (cubic metre)
- water quantity calculated in a certain sector
- water quantity measured in a certain sector
- difference between the calculated and the measured data
- calculated leakage
- calculated evaporation
- sabotage notification information log

### Data assessment module

- search for hidden connections in the database
- basis formula refinement through modelling
- chronological storage of measured and calculated for further analysis and support

### Database

- storage of measured and calculated prognoses

### Timetable module

- collects water quantity demand
   ∘ emergency management - inland inundation, floodwaters
   ∘ agricultural entrepreneurs - irrigation demand
- cumulates quantity requests, calculates the amount, place and time of surplus
- calculates water movement demand
- collects water movement data
- cost and charge calculations, financial optimization
- elaborates and constantly refreshes water transport timetables
- send mechanical control orders to the data collection control device
- work logs of manual operating demand
- supervises operating implementations
- operating log
- tender prompt request management
- operating plan elaboration and management

### Database

- operating physical and financial data
- actual water level and quantity data
- water level and quantity data in a chronological order
- operating log

### User client module

- user authentication
- data input to different modules
- data transfer according to requests
- business processes, workflow
- notifications
- data transfer to external data processing software

### Field of the Invention

The present invention relates to the management and conservation of irrigation water, primarily for, but not limited to, residential and commercial landscaping applications, and more specifically, to a greatly simplified method for doing so based upon seasonal temperature variations and geographic locations.

### Description of the prior art

### GPS, or general problem solving based on Occam's razor

The products of modelling processes may not be generated based on arbitrary simple principles, because the risks through the theory of aimlessness and/or overfitting should always be managed. The solution presented here and now tries to model the phenomenon "consistence" in the frame of similarity analyses and not in the parallel way of classic argumentation techniques. This solution uses the Solver-module as a kind of inference machine.

### OAM

Almost universal strategic a numeric framework (GPS - general problem solver), its input data is always an object-attribute-matrix.

### SUMMARY OF THE INVENTION

The system includes more interconnected innovative layers:
- the primary control layer is based on an optimal water usage model, which has alternative layers in certain model variants and the composition method and procedure of these is interpreted as know-how (similarity analysis, special neural webs, special explorative models)
- the strategic layer of control is based on competing model variants and on the automatic choice between them, targeting an ideal mathematic implementation, which is a know-how
- the adaptive layer of the control is composed of a data-based learning problem
- the sensor layer of physical devices and the generated primary OAM from measured data is a know-how extracted from specialists know-how

### BRIEF DESCRIPTION OF THE DRAWINGS

1. figure: System elements
2. figure: OAM to a main problem CBR-based comprehension
3. figure: OAM to a sustainable model choice optimization
4. figure: Processing part-results

### DETAILED DESCRIPTION

### 1. figure: System elements

The physical system contains standard elements that can cooperate with a special multilayer control system on the input and output side.

### 2. figure: OAM to a main problem CBR-based comprehension

The OAM is a flexible logical frame, which elements can be zoomed, aggregated, edited, integrated.

### 3. figure: OAM to a sustainable model choice optimization

The choice between model variants is made on the basis of competing raw and hybrid models. In case of attributes every mistake can be minimized.

### 4. figure: Processing part-results

Data processing consist of more steps deriving from revealing the ideal model variant, minimizing risks of mistakes.

The system consist of the following elements:
- WMS (Water Management Server)
- NGWMSW (New Generation Water Management Software)
- SecHW (Security Hardware)
- PCM - HW (Pump Control &Monitor Hardware)
- Wireless Sensor
- Existing infrastructure

### PATENT CITATIONS

Pitlik, L. 1993: Automatisierte Generierung problem spezifischer Prognose Funktionen zur Entscheidungsunterstutzung-hftp://www.econbiz.de/Record/automatisierte-generierung-problemspezifischer-prognosefunktionen-zur-entscheidungsunterst%C3%BCtzung-pitlik-I%C3%A1szl%C3%B3110004338037 - PhD-Dissertation, JLU-Giessen, Germany INNOCSEKK-application (2006-2009 - http://nkfih.qov.hu/palyazatok/ktia/tamogatott-proiektek/2005/baross-gabor-program-150203 - Online elemzési szolgáltatások fejlesztése Crew-Pa Kft. 24 900 000)
   MIAÚ documentation https:/ /www.google.hu/search?g=hasonlósáqelemzés+site%3Amiau.gau.hu MATARKA documentation https://www.google.hu/search?g=hasonóságelemzés+site%3Amatarka.hu Similarity analysis licence: HTTP://MIAU.GAU.HU/MIAU/MTMT/20150705/ALKOTAS 97.HTML

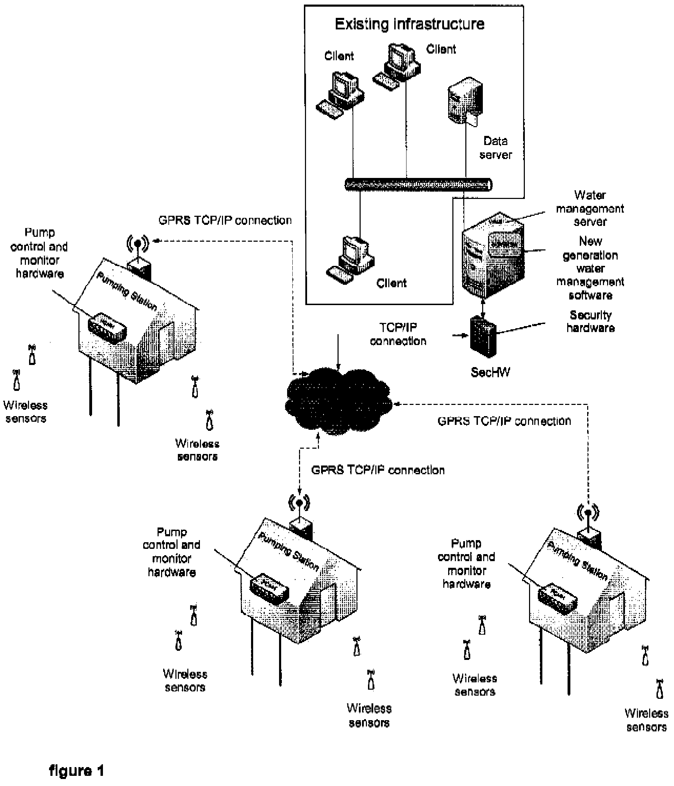

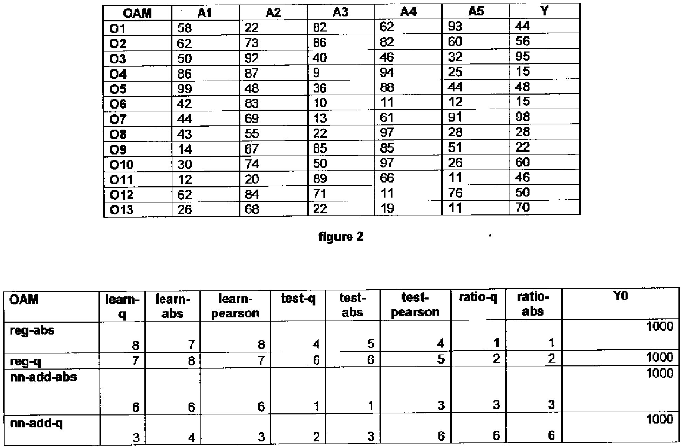

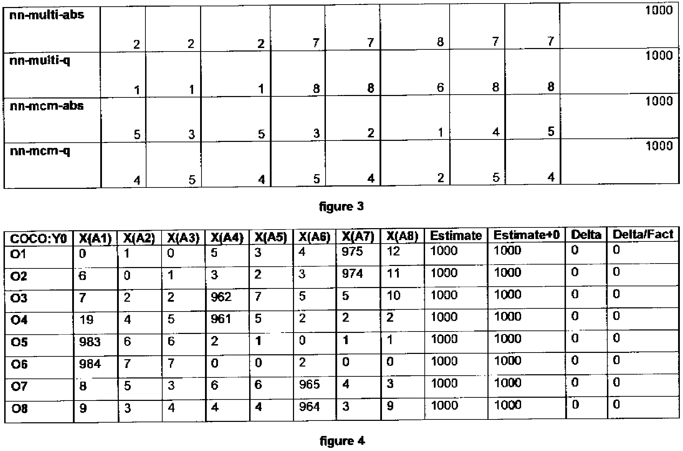

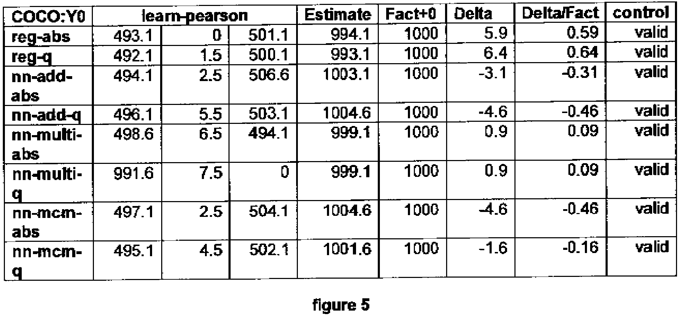

## Claims

1. Adaptability improving modules/procedures of irrigation control systems:
a) defining the sensor set
b) defining the derived phenomena
c) defining the sensor-based object-attribute-matrix (learning formula)
d) defining the models
e) defining the model creation software framework, creation of models (estimations)
f) defining the estimation error-variants and the calculation of them
g) the error-based object-attribute-matrix (learning formula)
h) anti-discriminative modelling and/or standard similarity analysis
i) function-symmetry-based consistence-monitoring subsystem
j) defining the best alternative choosing algorithm (automatic decision)

2. The procedure described in point 1 of the present chapter produces a cloud-based computer software which's architecture contains the described layers and elements.
